(19) Europäisches Patentamt / European Patent Office / Office européen des brevets

(11) **EP 3 235 030 B1**

(12) **FASCICULE DE BREVET EUROPEEN**

(45) Date de publication et mention de la délivrance du brevet:
**06.03.2019 Bulletin 2019/10**

(21) Numéro de dépôt: **15813056.7**

(22) Date de dépôt: **17.12.2015**

(51) Int Cl.:
*H01M 8/04029* *(2016.01)*    *H01M 8/04223* *(2016.01)*

(86) Numéro de dépôt international:
**PCT/EP2015/080173**

(87) Numéro de publication internationale:
**WO 2016/097115 (23.06.2016 Gazette 2016/25)**

(54) **SYSTÈME À PILE À COMBUSTIBLE**

BRENNSTOFFZELLENSYSTEM

FUEL CELL SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2014 FR 1462906**

(43) Date de publication de la demande:
**25.10.2017 Bulletin 2017/43**

(73) Titulaire: **Compagnie Générale des Etablissements Michelin**
**63000 Clermont-Ferrand (FR)**

(72) Inventeurs:
• **BRAILLARD, Vincent**
**63040 Clermont-Ferrand Cedex 9 (FR)**
• **PAGANELLI, Gino**
**63040 Clermont-Ferrand Cedex 9 (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**WO-A2-2005/119825    FR-A1- 2 971 089**
**US-A- 5 605 770**

**Description**

DOMAINE DE L'INVENTION

La présente invention se rapporte aux piles à combustibles, en particulier mais non exclusivement aux piles à combustible du type à électrolyte sous la forme d'une membrane polymère (c'est à dire de type PEFC pour Polymer Electrolyte Fuel Cell).

Plus particulièrement, la présente invention se rapporte à un système à pile à combustible destiné à être utilisé, et notamment démarré, dans des conditions de température particulièrement froides.

ETAT DE LA TECHNIQUE

On sait que les piles à combustibles permettent la production directe d'énergie électrique par une réaction électrochimique d'oxydoréduction à partir d'un gaz carburant et d'un gaz comburant, sans passer par une conversion en énergie mécanique. Cette technologie semble prometteuse notamment pour des applications automobiles. Une pile à combustible comporte un empilement de cellules de base, chacune comprenant une anode, une cathode et une membrane échangeuse d'ions, faisant office d'électrolyte. Lors du fonctionnement d'une pile à combustible, deux réactions électrochimiques simultanées se produisent : une oxydation du carburant à l'anode, et une réduction de comburant à la cathode. Ces deux réactions produisent des ions, positifs et négatifs, qui se combinent au niveau de la membrane et produisent de l'électricité sous la forme d'une différence de potentiels. Dans le cas d'une pile à combustible oxygène-hydrogène, ce sont les ions H+ et O- qui se combinent.

Les assemblages membrane-électrodes, ou cellules, sont empilés en séries et séparés par une plaque bipolaire qui conduit les électrons de l'anode d'une cellule à la cathode de la cellule voisine. A cet effet, des canaux sont prévus sur les deux faces des plaques bipolaires en contact avec les assemblages membrane-électrode. Chaque canal possède une entrée par laquelle pénètre le carburant ou le comburant, et une sortie par laquelle sont évacués les gaz en excès et l'eau générée par la réaction électrochimique.

Les piles à combustibles sont destinées à de nombreuses applications, notamment des applications mobiles. Dans ce cas, elles peuvent être amenées à fonctionner dans des conditions de température extrêmes. Ainsi, lorsque la température extérieure devient très négative, par exemple de l'ordre de -20°C, la température interne de la pile à combustible diminue également, jusqu'à atteindre parfois une température inférieure à 0°C. L'objectif d'une procédure de démarrage à froid de pile à combustible est d'élever la température interne de la pile à combustible au-dessus du point de congélation de l'eau avant que la pile à combustible ne commence à rejeter l'eau générée par la réaction électrochimique. Pour permettre un démarrage instantané et éviter une consommation d'énergie parasite, il n'est pas envisageable de préchauffer la pile à combustible avant le démarrage par température négative.

On a constaté que le fonctionnement d'une pile à combustible à des températures très négatives devenait particulièrement critique au moment du démarrage. Ainsi, il s'avère utile de prévoir des systèmes à pile à combustible aptes à démarrer à ces températures.

On connaît par exemple, de la demande WO 2005/078847, un système à pile à combustible muni d'un circuit de refroidissement dédoublée. Ainsi, le circuit de refroidissement comprend un circuit primaire, et un circuit secondaire. Le circuit secondaire, plus petit, est muni d'une petite pompe, permettant de brasser uniquement le volume d'eau interne de l'empilement, sans la renvoyer dans le circuit primaire. Ainsi, l'eau chaude sortant de l'empilement est renvoyée plus rapidement dans la pile à combustible, sans avoir eu le temps de refroidir, ce qui permet de faciliter le démarrage à froid de la pile.

Dans un premier temps, le circuit de refroidissement primaire n'est pas actif, puisque seule la pompe du circuit secondaire est en fonctionnement. Or, dans un tel système, des capteurs de température sont placés dans le circuit de refroidissement primaire, pour déterminer le moment où il devient nécessaire de démarrer le refroidissement. Si le circuit primaire n'est pas en fonctionnement, il devient impossible d'obtenir une telle information de température, ce qui est risqué puisqu'on peut aboutir à des situations de surchauffe locale, au sein du circuit secondaire, sans que le circuit primaire ne soit activé.

On connaît également, de la demande FR 2 971 089 A1 un système à pil à combustible comportant un circuit de refroidissement. Toutefois, on a constaté que le système décrit dans ce document ne permettait pas un démarrage correct dans des conditions de températures négatives.

La présente invention vise donc à remédier à cet inconvénient, en fournissant un système à pile à combustible permettant un démarrage à froid, tout en garantissant l'intégrité de la pile.

BREVE DESCRIPTION DE L'INVENTION

Ainsi, l'invention concerne un système à pile à combustible comportant :

- un empilement de cellules électrochimiques séparées par des plaques bipolaires, et comprenant chacune une anode, une cathode et une membrane échangeuse d'ions,

- un circuit d'alimentation en gaz carburant, et un circuit d'alimentation en gaz comburant, et

- un circuit de refroidissement permettant la circulation d'un fluide de refroidissement, le circuit de refroidissement comprenant un circuit secondaire et un circuit primaire de taille inférieure au circuit secondaire, isolés l'un de l'autre par une vanne thermostatique,

Une micro-pompe, en sortie de l'empilement, et permettant un brassage du volume d'eau interne de l'empilement, et le système comportant en outre des moyens de détermination d'une température interne du coeur de pile, et des moyens d'activation du circuit primaire de refroidissement lorsque la température interne devient supérieure à un seuil prédéterminé.

Dans une réalisation préférentielle, le système comprend en outre des moyens pour déterminer une température dans le circuit primaire de refroidissement. Ces moyens sont, par exemple, sous la forme de capteurs de température installés dans le circuit primaire.

Dans une réalisation préférentielle, les moyens d'activation du circuit primaire comportent des moyens d'activation, de façon continue et/ou impulsionnelle, d'une pompe installée dans le circuit primaire

Le mode d'activation de la pompe dépend de la température interne déterminée ainsi que de la température dans le circuit de refroidissement.

  ○ lorsque la température interne de la pile est supérieure à un premier seuil prédéterminé, et que la température du liquide de refroidissement avant son entrée dans l'empilement est inférieure à un second seuil prédéterminé, on commande la pompe de refroidissement de manière impulsionnelle,
  ○ lorsque la température dans le circuit de refroidissement devient supérieure au second seuil prédéterminé, on commande la pompe de refroidissement en mode continu.

La température interne de la pile est une estimation de la température de coeur de pile. Le choix du premier seuil prédéterminé est effectué de manière à ce que le liquide de refroidissement ne soit pas mis en mouvement trop tôt, ce qui pourrait conduire à un refroidissement brutal avec le risque de gel de l'eau produite dans la pile. Le choix du second seuil est effectué de manière à éviter toute surchauffe locale de la pile à combustible non refroidie, sans toutefois créer de chute de tension aux bornes des cellules de la pile.

En effet, l'activation impulsionnelle de la pompe de refroidissement permet d'instiller progressivement de l'eau encore froide dans l'empilement, et ainsi de maintenir une tension acceptable aux bornes des cellules de la pile à combustible.

Dans un autre mode de réalisation, alternativement au pilotage en mode impulsionnel, on utilise une pompe de refroidissement à vitesse variable avec une capacité de très faible débit. Dans ce cas, la pompe est activée uniquement en mode continu Toutefois la viscosité du liquide de refroidissement à très basse température est très élevée et un faible débit est difficilement réalisable avec une pompe de refroidissement classique conçue pour un liquide moins visqueux et un débit bien plus important. Le pilotage en mode impulsionnel permet d'atteindre la finesse nécessaire sur le réglage du débit moyen sans devoir recourir à une pompe très élaborée. Le pilotage en mode impulsionnel permet en outre de mieux garantir que le liquide se met bien en mouvement sans nécessairement recourir à un débitmètre.

Dans une réalisation avantageuse, la détermination de la température interne de la pile est effectuée en prenant en compte la capacité calorifique et la masse des matériaux constituant la pile, et l'énergie thermique dissipée par la pile. Ainsi, on utilise par exemple une formule du type

$$\text{Teta\_FC} = \sum_{k=0}^{n} \frac{((UCell_{LHV} \cdot NbCell) - U_{FC}) \cdot I_{FC}}{M_1 \cdot C_1 + M_2 \cdot C_2} + \text{Teta}_{init}$$

$$UCell_{LHV} = \frac{MW_{H2} \cdot LHV \cdot 1000}{2 \cdot F} = 1.2531V$$

Avec :

*Teta_FC : température estimée de la PEMFC [°C]*
*NbCell : Nombre de cellules composant le stack [16]*
*UFC : Tension totale sur le stack [V]*
*IFC : Courant stack [A]*
*M1 : Masse du liquide de refroidissement interne à la PEMFC [kg]*
*C1 : Capacité calorifique du liquide de refroidissement []/kgK]*
*M2 : Masse des plaques bipolaires [kg]*
*C2 : Capacité calorifique des plaques bipolaires []/kgK]*

Dans une réalisation particulière, le courant de démarrage appliqué est une rampe de 0.015A/cm2/s, avec une valeur maximale de 0.5A/cm2. Ceci correspond, pour une pile de 200 cm$^2$ à un courant de 100A. Toutefois, dans certaines situations, l'application d'une telle rampe peut conduire à une baisse importante de la tension aux bornes des cellules de la pile à combustible. Pour éviter un tel écroulement, et ses conséquences sur le fonctionnement de la pile, on adapte, dans une réalisation particulière, le courant appliqué, de manière à garantir que la tension aux bornes de chacune des cellules soit supérieure ou égale à 0,2 volts. Ceci est réalisé à l'aide d'un régulateur qui transmet une valeur de courant maximum à une unité de pilotage de la puissance délivrée par la pile à combustible, tel un DCDC par exemple.

Dans une autre réalisation encore, le procédé de pilotage de la pile à combustible comporte une phase de séchage préalable de la pile à combustible avec l'air ambiant, cette phase de séchage ayant lieu avant que la température ambiante ne passe sous 0°C. Dans une réalisation, cette température est fixée à 5°C.

La pompe est pilotée de manière à ce que le temps d'activation soit constant. Celui-ci est fixé au minimum requis pour garantir la mise en mouvement du fluide de refroidissement dans toutes les circonstances. Il dépend de la dynamique de la pompe et des pertes de charges dans le circuit de la pile. Par exemple la durée de fonctionnement est fixée à 0.6 secondes. Le temps d'arrêt de la pompe entre 2 impulsions est variable. On attend que le modèle de température de la pile retourne une valeur de température supérieure de 1°C par rapport à l'impulsion précédente de façon à engendrer une élévation progressive de la température du coeur de la pile à combustible. Le temps entre 2 impulsions est en outre limité entre un temps minimum de 2 secondes et un temps maximum de 12 secondes. Dans une autre réalisation, la durée d'arrêt de la pompe est déterminée de manière à garantir que la tension moyenne aux bornes des cellules de la pile redevienne supérieure à une valeur prédéterminée entre deux impulsions, par exemple 0.6V. En effet chaque impulsion provoque l'introduction d'une petite quantité de liquide de refroidissement encore très froide et provoquant un abaissement de la tension des cellules.

Dans une réalisation préférentielle, le système comprend en outre des moyens de séchage des membranes échangeuses d'ions lors d'une extinction du système à pile à combustible.

Dans un exemple de réalisation correspondant à une pile à combustible de 16 cellules de 200cm2, ce séchage à l'air est effectué en utilisant les paramètres suivants :

- Le séchage est effectué avec de l'air ambiant soufflé par un compresseur

- Au niveau de l'anode, l'air est envoyé avec un débit de 15 litres par minute,

- Au niveau de la cathode, l'air est envoyé avec un débit de 85 litres par minute,

- Le séchage est effectué lorsque la température ambiante descend sous 5°C ; et il s'arrête lorsque l'impédance de l'empilement, mesurée à 1kHz, atteint la valeur de 40 milliOhm.

- En outre, le séchage est réalisé préférentiellement après une période de fonctionnement de la pile juste avant sa dernière extinction à une stoechiométrie cathode supérieure ou égale à 2,8 et de préférence sans humification.

- Dans ces conditions, le séchage est effectué en moins de 90 secondes. Dans d'autres conditions, par exemple si la stoechiométrie préalable était de 2, le temps de séchage deviendrait alors égal à environ 7 minutes.

Dans une réalisation préférentielle, le système comporte en outre un dispositif de mesure de l'humidité des membranes échangeuse d'ions. Ce dispositif prend la forme, par exemple, d'un générateur de courant qui alimente la pile avec un courant à une fréquence de 1000 Hz. On mesure alors les ondulations de tension aux bornes d'au moins une cellule, et on détermine ainsi l'impédance de la membrane. De cette impédance, on peut déduire l'hygrométrie.

BREVE DESCRIPTION DES FIGURES

D'autres objectifs et avantages de l'invention apparaîtront clairement dans la description qui va suivre d'un mode de réalisation préféré mais non limitatif, illustré par les figures suivantes dans lesquelles :

- La figure 1 présente un système selon l'invention,

- la figure 2 représente les tensions aux bornes des cellules d'une pile à combustible dans le cas où la pompe de refroidissement est activée en continu pendant une phase de démarrage à froid.

- La figure 3 représente l'évolution de plusieurs températures au sein de la pile à combustible dans le cas où la pompe de refroidissement est démarrée en différé, et activée de manière impulsionnelle pendant une phase de démarrage à froid.

- la figure 4 représente les tensions aux bornes des cellules d'une pile à combustible dans le cas où la pompe de refroidissement est démarrée en différé, et activée de manière impulsionnelle pendant une phase de démarrage à froid.

DESCRIPTION DU MEILLEUR MODE DE REALISATION DE L'INVENTION

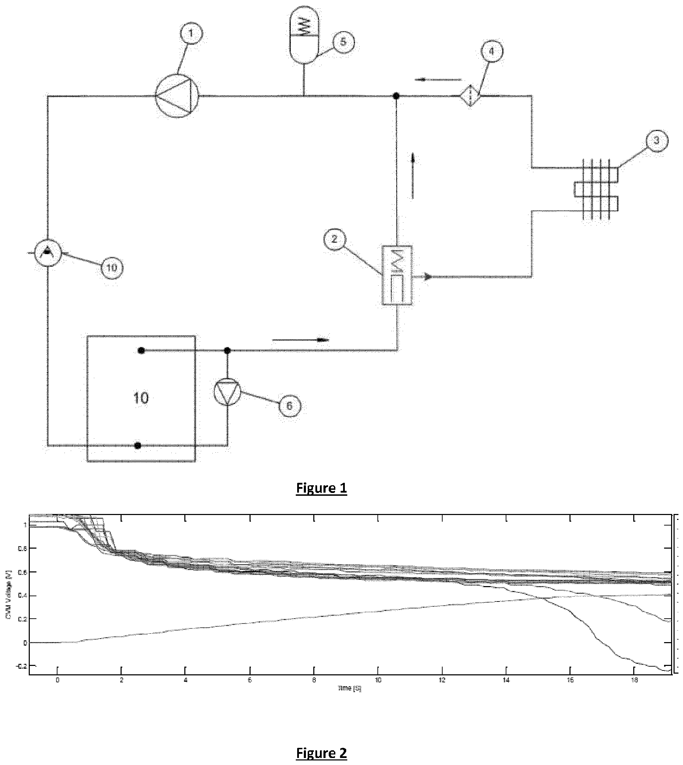

La figure 1 montre un système selon l'invention, comportant un empilement de cellules électrochimiques 10. Le système comprend un circuit de refroidissement liquide, divisé en un circuit primaire et un circuit secondaire. Le volume du circuit primaire est minimisé par rapport aux systèmes de l'état de la technique, et isolé du circuit secondaire par une vanne thermostatique 2.

Le circuit primaire est muni d'une pompe de refroidissement 1. Ainsi que décrit précédemment, cette pompe peut avantageusement être activée de manière continue et/ou impulsionnelle dans le cadre d'un démarrage de la pile à des températures très négatives.

Le système comprend également un filtre déionisant 4, un vase d'expansion 5, et un radiateur 3.

Une petite pompe, également appelée « micro-pompe » dans la suite de la description 6 est installée en sortie de l'empilement 10. Cette petite pompe permet de brasser le volume d'eau interne de l'empilement, avec un minimum de circuit externe. Une telle construction permet d'homogénéisé la température au coeur de l'empilement, ce qui facilite le démarrage à des températures négatives en évitant un gel de l'eau issue de la réaction électrochimique qui se produit dans l'empilement et en évitant le risque d'apparition de points localement chauds sans augmenter sensiblement la quantité d'eau à réchauffer. De façon avantageuse, il est utile que la micro-pompe soit positionnée au plus près de l'empilement. En effet son éloignement impliquerait une augmentation du volume d'eau à réchauffer et des déperditions supplémentaires ce qui pourrait compromettre le succès du démarrage à froid. En effet, la possibilité de démarrage à froid d'une pile dépend de la capacité de l'empilement à élever sa température coeur au-dessus du point de congélation avant que l'eau produite par la réaction ne commence à être rejetée.

Le circuit représenté sur la figure 1 doit en outre être équipé d'un clapet anti-retour 10 de façon à garantir que le débit généré par la micro-pompe 6 passe intégralement par l'empilement. La figure 2 montre l'évolution des tensions aux bornes des cellules d'une pile à combustible, lors d'un démarrage à froid à -15°C piloté selon les procédés de l'état de la technique, à savoir en opérant la pompe de refroidissement en continu.

On constate une diminution progressive de la tension aux bornes de l'ensemble des cellules, suivie par un écroulement, à partir de la 13$^{\text{ème}}$ seconde, de la tension aux bornes de la première cellule (courbe la plus basse sur le graphe), suivie peu après par la tension aux bornes de la deuxième cellule.

Cette chute de tension rapide est révélatrice d'un blocage lié au gel de l'eau produite dans la pile à combustible. Par conséquent, le fonctionnement de la pile est dégradé.

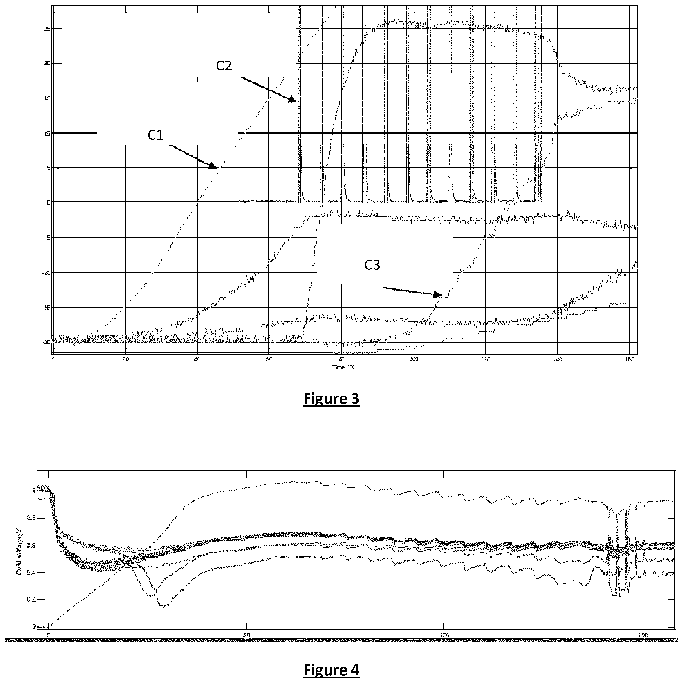

Les figures 3 et 4 représentent l'évolution de paramètres dans une pile à combustible pour laquelle un procédé de pilotage selon l'invention est mis en oeuvre. Ainsi, ces deux graphes montrent l'évolution lors d'un démarrage à froid au cours duquel la pile est d'abord opérée avec uniquement la micro-pompe activée, puis la pompe de refroidissement principale est opérée de manière impulsionnelle.

Sur la figure 3, la courbe C1 représente la température estimée de la pile à combustible, la courbe C2 représente la consigne de pilotage de la pompe de refroidissement, et la courbe C3 représente la température à l'entrée de l'empilement. Après environ 65 secondes, la température, montrée en courbe C1, atteint une valeur de 20°C. Cette valeur correspondant à un premier seuil prédéterminé dans une réalisation de l'invention, la pompe de refroidissement, ou pompe à eau, est alors pilotée en mode impulsionnel, ainsi que montré sur la courbe C2.

Après 135 secondes de fonctionnement, la température du liquide de refroidissement en entrée de la pile, montrée sur la courbe C3, devient supérieure à 5°C. Cette valeur correspondant à un second seuil prédéterminé dans une réalisation de l'invention, la pompe de refroidissement est alors opérée en continu. A partir de cet instant, le liquide de refroidissement circule en continu, ce qui provoque assez rapidement la diminution puis l'annulation de l'écart de température du liquide de refroidissement entre l'entrée et la sortie de la pile à combustible.

Dans le même temps, la figure 4 montre l'évolution correspondante des tensions individuelles des cellules de la pile à combustible lorsqu'un procédé selon l'invention est mis en oeuvre On constate sur cette figure que, contrairement à la figure 1, les premières cellules de la pile à combustible conservent un niveau de tension acceptable, voire remontent rapidement lors de l'activation de la pompe de refroidissement. La pompe de refroidissement est activée de manière impulsionnelle. On constate que chaque injection d'eau froide provoque une baisse de l'ensemble des tensions, représentée sur la figure 3 par des oscillations. La fréquence des impulsions de la pompe de refroidissement, et donc de l'injection de liquide de refroidissement, est déterminée de manière à laisser le temps à la tension aux bornes des cellules de retrouver un niveau acceptable avant une nouvelle injection. Dans le présent exemple, une injection a lieu toutes les 6 secondes.

Ainsi, l'utilisation d'un système selon l'invention permet de concilier un réchauffement du liquide contenu dans le circuit de refroidissement, tout en maintenant une tension acceptable aux bornes des cellules de la pile à combustible tout au long de la phase de démarrage et en garantissant une bonne homogénéité de la température au sein de l'empilement en dépit de l'activation différée de la pompe de refroidissement.

## Revendications

1. Système à pile à combustible comportant :

   - un empilement (10) de cellules électrochimiques séparées par des plaques bipolaires, et comprenant chacune une anode, une cathode et une membrane échangeuse d'ions,
   - un circuit d'alimentation en gaz carburant, et un circuit d'alimentation en gaz comburant, et
   - un circuit de refroidissement permettant la circulation d'un fluide de refroidissement, le circuit de refroidissement comprenant un circuit secondaire et un circuit primaire de taille inférieure au circuit secondaire, isolés l'un de l'autre par une vanne thermostatique (2),
   - des moyens de détermination d'une température interne du coeur de pile, et des moyens d'activation du circuit primaire de refroidissement lorsque la température interne devient supérieure à un seuil prédéterminé,
   - le système étant **caractérisé en ce qu'**il comporte une micro-pompe (6), installée en sortie de l'empilement (10) et connectée au circuit primaire, et permettant un brassage du volume d'eau interne issue de la réaction électrochimique au sein de l'empilement,

2. Système selon l'une des revendications précédentes, comprenant en outre des moyens pour déterminer une température dans le circuit primaire de refroidissement.

3. Système selon l'une des revendications précédentes, dans lequel les moyens d'activation du circuit primaire comportent des moyens d'activation, de façon continue et/ou impulsionnelle, d'une pompe installée dans le circuit primaire.

4. Système selon la revendication 3, dans lequel la pompe est une pompe de refroidissement à vitesse variable, activée uniquement en continu.

5. Système selon l'une des revendications précédentes, comprenant en outre des moyens de séchage des membranes échangeuses d'ions lors d'une extinction du système à pile à combustible.

6. Système selon la revendication 3, comportant en outre un dispositif de mesure de l'hygrométrie des membranes échangeuse d'ions.

## Patentansprüche

1. Brennstoffzellensystem, das aufweist:

   - einen Stapel (10) elektrochemischer Zellen, die durch bipolare Platten getrennt sind und je eine Anode, eine Kathode und eine Ionentauschermembran enthalten,
   - einen Versorgungskreislauf mit Treibstoffgas und einen Versorgungskreislauf mit brandförderndem Gas, und

- einen Kühlkreislauf, der die Zirkulation eines Kühlfluids erlaubt, wobei der Kühlkreislauf einen Sekundärkreislauf und einen Primärkreislauf geringerer Größe als der Sekundärkreislauf enthält, die durch ein Thermostatventil (2) voneinander isoliert sind,

- Einrichtungen zur Bestimmung einer Innentemperatur des Brennstoffzellenkerns und Einrichtungen zur Aktivierung des Primärkühlkreislaufs, wenn die Innentemperatur höher als eine vorbestimmte Schwelle wird,

wobei das System **dadurch gekennzeichnet ist, dass** es eine Mikropumpe (6) aufweist, die am Ausgang des Stapels (10) eingebaut und mit dem Primärkreislauf verbunden ist und ein Umwälzen des inneren Wasservolumens erlaubt, das von der elektrochemischen Reaktion innerhalb des Stapels stammt.

2. System dem vorhergehenden Anspruch, das außerdem Einrichtungen enthält, um eine Temperatur im Primärkühlkreislauf zu bestimmen.

3. System nach einem der vorhergehenden Ansprüche, wobei die Aktivierungseinrichtungen des Primärkreislaufs Einrichtungen zur kontinuierlichen und/oder gepulsten Aktivierung einer Pumpe aufweisen, die in den Primärkreislauf eingebaut ist.

4. System nach Anspruch 3, wobei die Pumpe eine Kühlpumpe mit variabler Geschwindigkeit ist, die nur kontinuierlich aktiviert wird.

5. System nach einem der vorhergehenden Ansprüche, das außerdem Einrichtungen zum Trocknen der Ionentauschermembranen bei einem Abschalten des Brennstoffzellensystems enthält.

6. System nach Anspruch 3, das außerdem eine Messvorrichtung der Feuchte der Ionentauschermembranen aufweist.

## Claims

1. Fuel cell stack system including:

   - a stack (10) of electrochemical cells separated by bipolar plates, and each comprising an anode, a cathode and an ion exchange membrane;
   - a fuel gas supply circuit and an oxidant gas supply circuit; and
   - a cooling circuit allowing a coolant fluid to circulate, the cooling circuit comprising a secondary circuit and a primary circuit that is smaller in size than the secondary circuit, which circuits are isolated from one another by a thermostatic valve (2);
   - means for determining an internal temperature of the stack core, and means for activating the primary cooling circuit when the internal temperature rises above a predetermined threshold,
   - the system being **characterised in that** it comprises a micropump (6), installed at the outlet of the stack (10) and connected to the primary circuit, and allowing the volume of water inside the stack issued from the electrochemical reaction that takes place in the stack to be mixed.

2. System according to one of the preceding claims, additionally comprising means for determining a temperature in the primary cooling circuit.

3. System according to one of the preceding claims, in which the means for activating the primary circuit include means for activating, in continuous and/or pulsed mode, a pump installed in the primary circuit.

4. System according to Claim 3, in which the pump is a variable speed cooling pump, activated only in continuous mode.

5. System according to one of the preceding claims, additionally comprising means for drying out the ion exchange membranes when shutting down the fuel cell stack system.

6. System according to Claim 3, additionally including a device for measuring the moisture content of the ion exchange membranes.

**Figure 1**

**Figure 2**

**Figure 3**

**Figure 4**

**EP 3 235 030 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005078847 A

- FR 2971089 A1